Europäisches Patentamt

European Patent Office

Office européen des brevets

(19)

(11) Veröffentlichungsnummer: **0 286 778 B1**

# EUROPÄISCHE PATENTSCHRIFT

(12)

(45) Veröffentlichungstag der Patentschrift: **18.12.91**

(51) Int. Cl.⁵: **A23G 1/22, A23G 1/26**

(21) Anmeldenummer: **88100296.8**

(22) Anmeldetag: **12.01.88**

Die Akte enthält technische Angaben, die nach dem Eingang der Anmeldung eingereicht wurden und die nicht in dieser Patentschrift enthalten sind.

(54) **Transport- und Behandlungsvorrichtung für mit giessfähiger, erstarrender Masse, wie Schokolade, füllbare Formen.**

(30) Priorität: **16.02.87 DE 3704761**

(43) Veröffentlichungstag der Anmeldung:
**19.10.88 Patentblatt 88/42**

(45) Bekanntmachung des Hinweises auf die Patenterteilung:
**18.12.91 Patentblatt 91/51**

(84) Benannte Vertragsstaaten:
**AT BE CH DE ES FR GB GR IT LI LU NL SE**

(56) Entgegenhaltungen:
**DE-A- 3 112 466      DE-B- 1 492 367
DE-B- 2 244 560      FR-A- 2 244 413
US-A- 3 429 466      US-A- 3 976 208
US-A- 4 436 500**

(73) Patentinhaber: **Gebr. Bindler Maschinenfabrik GmbH & Co. KG
Kölner Strasse 102-106
W-5275 Bergneustadt/Rhld.1(DE)**

(72) Erfinder: **Bindler, Uwe
Wilhelmstrasse 47
W-5275 Bergneustadt(DE)**
Erfinder: **Schürholz, Theo
Zöper Weg 10
W-5226 Reichshof-Eckenhagen(DE)**

(74) Vertreter: **Cohausz & Florack Patentanwälte
Postfach 14 01 61 Schumannstrasse 97
W-4000 Düsseldorf 1(DE)**

## Beschreibung

Die Erfindung bezieht sich auf eine Transport- und Behandlungsvorrichtung für aus einer oder zwei übereinanderliegenden, Formhohlräume für eine gießfähige, erstarrende Masse, wie Schokoladenmasse, aufweisenden Platten bestehenden Formen, mit einem umlaufenden, insbesondere als Kettenförderer ausgebildeten Endlosförderer, der zur Aufnahme und zum Wenden der Formen Trag- und Halteelemente aufweist.

Für die Herstellung von Hohlräumen aus gießfähiger, erstarrender Masse, z.B. Schokoladenmasse, werden Formhohlräume aufweisende Doppelformen verwendet, in deren oberer und unterer Platte jeweils einander korrespondierende Formhohlräume ausgebildet sind. Nach dem Einfüllen der gießfähigen Masse in die Formhohlräume der unteren Platte werden durch Auflegen der oberen Platte die Formhohlräume geschlossen.

Für diese Art der Herstellung der Hohlkörper gibt es verschiedene Vorrichtungen.

Bei einer bekannten Vorrichtung der eingangs genannten Art sind die Unterformen an den Trag- und Halteelementen des Endlosförderers befestigt, so daß sie in diesem Zustand gefüllt werden können. Das Verschließen mit der Oberform erfolgt durch eine Bedienungsperson, die die Oberform auf die Unterform auflegt und mit Klammern befestigt.

Bei einer anderen Vorrichtung werden die mit gießfähiger Masse gefüllten Unterformen über eine horizontal verlaufende Transportbahn zu einem Wendezylinder gefördert. Eine Bedienungsperson verschließt die Formen durch Auflegen der Oberform und schiebt die Doppelformen in entsprechende Einschübe des Wendezylinders.

Bei beiden Vorrichtungen wird eine Bedienungsperson benötigt, die die Doppelformen komplettiert, bevor sie im Kettenförderer oder in der Wendetrommel gewendet werden.

Die Offenlegungsschrift DE-A-3 112 466 zeigt eine Vorrichtung zum Fördern von Gegenständen, welche von einem unteren Band auf ein oberes Band zugeführt werden sollen. Die zu fördernden Gegenstände sind auch in besagtem Dokument Gießformen mit flüssiger oder noch nicht erstarrter Schokolade. DE-A-3 112 466 beschäftigt sich mit dem Problem, wie vermieden werden kann, daß bei einem Richtungswechsel und Anheben der Gießformen das füssige Schokoladenmaterial die Ränder der Formen überschwemmt. Die hierzu vorgeschlagene Lösung besteht darin, den Transport der Gießformen vom unteren Rand in das obere Band entlang einer kreis- oder sinusförmigen Kurve ablaufen zu lassen, d.h. daß ruckartige Bewegungs- oder Richtungsänderungen vermieden werden, so daß ein Überschwappen der Schokolademasse verhindert wird. Ein Zusammenhang mit der, der Erfindung zu Grunde liegenden Übergabe der einzelnen Formen, ohne daß es notwendig ist, daß für diese Aufgabe der Endlosförderer oder die Übergabeeinrichtung angehalten wird, ist der Schrift also nicht zu entnehmen.

Der Erfindung liegt die Aufgabe zugrunde, eine Transport-und Behandlungsvorrichtung der eingangs genannten Art zu schaffen, bei der die komplettierten Doppelformen automatisch den Trag- und Halteelementen des Endlosförderers zugeführt werden, ohne daß es notwendig ist, daß für diese Übergabe der Endlosförderer angehalten wird.

Diese Aufgabe wird erfindungsgemäß dadurch gelöst, daß einem vertikal verlaufenden Abschnitt des Endlosförderers eine horizontal verlaufende Transportbahn für die Formen vorgeordnet ist und daß zwischen dem vertikal verlaufenden Abschnitt des Endlosförderers und der Transportbahn eine Übergabevorrichtung angeordnet ist, aus der die von der Transportbahn übernommenen Formen mittels einer Schubvorrichtung unter Gleichlauf an die Trag- und Halteelemente des Endlosförderers überführbar sind.

Weitere Ausgestaltungen der Erfindung sind in den Unteransprüchen gekennzeichnet. So weist nach einer ersten Ausgestaltung die Übergabevorrichtung Auflageschienen auf, die im vertikal verlaufenden Abschnitt des Endlosförderers parallel und synchron zu den Trag- und Halteelementen des Endlosförderers angetrieben sind. Die wegen der Verteilung der gießfähigen Masse an den Formhohlräumen insbesondere während des Transportes dreh- und/oder schwenkbar am Endlosförderer gelagerten Trag- und Halteelemente werden durch im vertikalen Abschnitt des Endlosförderers vorgesehene Führungsschienen zentriert dreh- und/oder schwenkfest gehalten. Vorzugsweise besteht die Schubvorrichtung aus einer in Transportrichtung der Transportbahn bewegbaren und sich über die vertikale Transporthöhe der Formen in der Übergabevorrichtung erstreckenden Schieber. Die Übergabevorrichtung ist zweckmäßigerweise nach Art eines Paternosteraufzuges ausgebildet.

Aufgrund der insbesondere nach dem Prinzip eines Paternosteraufzuges ausgebildeten Übergabevorrichtung ergeben sich weder bei der Übernahme der Formen von der Transportbahn durch die Auflageschienen der Übergabevorrichtung noch bei der Übergabe der Formen von den Auflageschienen an die Trag- und Halteelemente des Endlosförderers Schwierigkeiten. Die Veränderung der Transportrichtung der Formen beim Übergang von der Transportbahn auf die Übergabevorrichtung ist deshalb unproblematisch, weil der Abstand der Auflageschienen und damit auch die Zeit, in der sich keine Auflageschienen in der Ebene der Transportbahn befinden, ausreichend groß ist, um die Doppelform in die Position zu überführen, in der sie von den Auflageschienen der Übergabevorrichtung übernommen werden kann. Wegen des großen Abstandes der aufeinanderfolgenden Auflageschienen stört auch nicht der sich über die vertikale Transporthöhe der Dopelformen in der Übergabevorrichtung erstreckende Schieber. Für die Übergabe von den Auflageschienen Übergabevorrichtung an die Trag- und Halteelemente des Endlosförderers steht die gesamte Zeit zur Verfügung, in der die Trag- und Halteelemente parallel zu und synchron mit den Auflageschienen der Übergabevorrichtung laufen.

Im folgenden wird die Erfindung anhand einer ein Ausführungsbeispiel schematisch darstellenden Zeichnung näher erläutert.

Im einzelnen zeigen

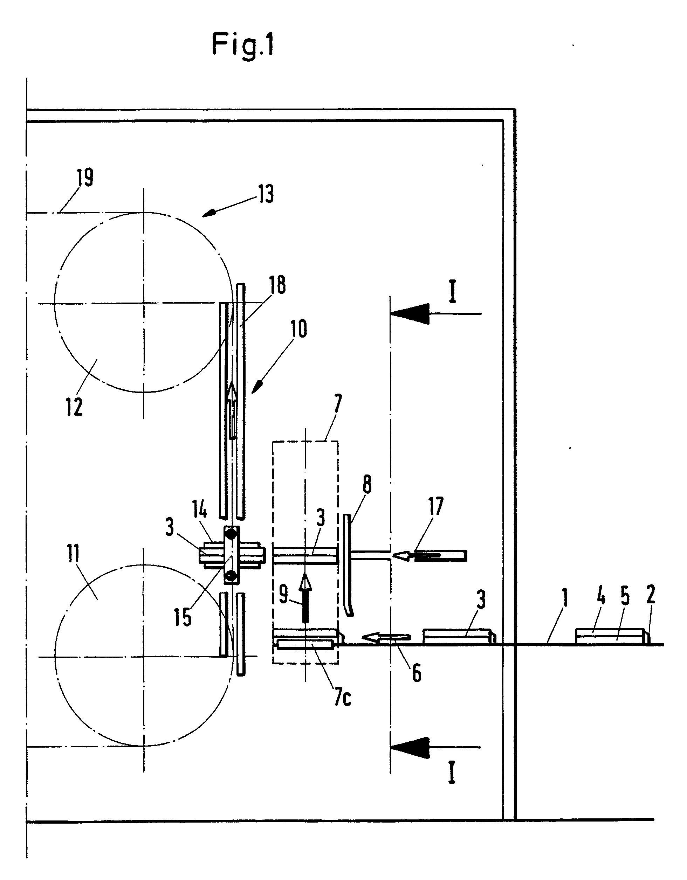

Fig. 1    die Transport- und Behandlungsvorrichtung im Bereich der Übergabevorrichtung mit einem Teil der horizontalen Transportbahn und einem Teil des Endlosförderers in Seitenansicht und

Fig. 2    die Transport- und Behandlungsvorrichtung gemäß Fig. 1 im Schnitt nach der Linie I-I der Fig. 1.

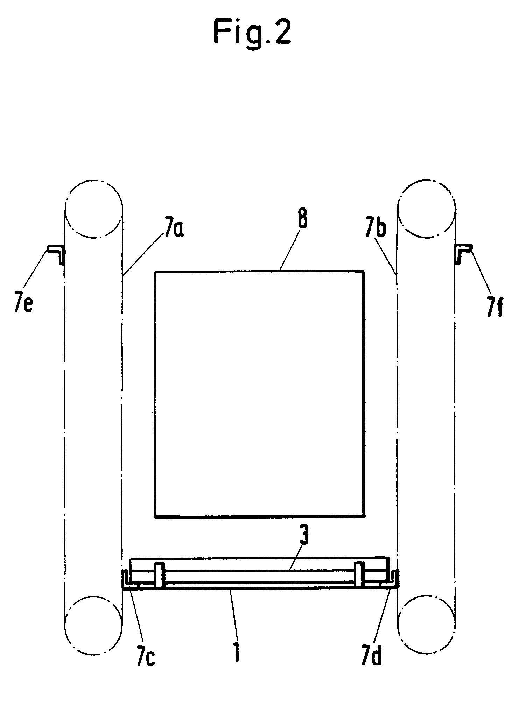

Auf einer Transportbahn 1 werden mittels Mitnehmer 2 flachliegend Doppelformen 3 mit gegenseitigem Abstand transportiert. Die Doppelformen 3 bestehen aus zwei plattenförmigen, übereinanderliegenden Formhälften 4,5, in denen korrespondierende geschlossene Formhohlräume vorgesehen sind. Während dieses Transportes sind die unteren Formhälften 5 bereits mit gießfähiger Masse gefüllt. Die Doppelformen 3 werden in Richtung eines Pfeils 6 zu einer Übergabevorrichtung 7 transportiert, die nach Art eines Paternosteraufzuges ausgebildet ist. Wie Fig. 2 zeigt, weist die Übergabevorrichtung 7 auf beiden Seiten des Transportweges vertikal verlaufende Endlosketten 7a, 7b auf, die Auflageschienen 7c-7f für die Doppelformen 3 tragen. Die Übergabevorrichtung weist eine sich praktisch über die gesamte Höhe des vertikalen Transports der Doppelformen 3 erstreckende Schieberplatte 8 auf, die in Richtung des Pfeils 17 bewegbar ist, um die Doppelformen von den Auflageschienen 7 zu schieben.

Ein als Kettenförderer ausgebildeter Endlosförderer 13 weist ein Paar über Umlenkräderpaare 11,12 geführte Stränge 19 auf, an denen drehbar um Achsen 15 Trag- und Halteelemente 14 für die Doppelformen 3 angelenkt sind. Die Trag- und Halteelemente 14 ermöglichen der Doppelform nicht nur eine Verschwenkung um die Achse 15, sondern auch um eine dazu querliegende, nicht dargestellte Achse. Mittels nicht dargestellter, zu den Strängen 19 parallel verlaufender Stränge (Ketten) und an den Trag- und Halteelementen 14 vorgesehener, damit gekuppelter Antriebsräder erfolgt die Drehbewegung der Trag- und Halteelemente 15 und damit der Doppelplatten um die beiden erwähnten Achsen, so daß die Doppelformen eine Taumelbewegung während des Transportes ausführen.

Im Bereich des vertikal verlaufenden Abschnittes 10 des Endlosförderers sind Führungsschienen 18 vorgesehen, die die sonst frei drehbaren Trag- und Halteelemente 14 für die Doppelformen 3 drehfest halten. Damit dies möglich ist, ist zwischen den Trag- und Halteelementen 14 für die beiden Drehbewegungen jeweils eine Rutschkupplung vorgesehen.

Der Abstand der Doppelformen 3 auf der Transportbahn 1 sowie die Transportgeschwindigkeit auf der Transportbahn 1 auf der einen Seite und der Transport der Doppelformen 3 durch die Auflageschienen 7c-7f in der Übergabevorrichtung 7 auf der anderen Seite und der Transport der Doppelformen 3 in den Trag- und Halteelementen 14 im vertikalen Abschnitt 10 des Endlosförderers 13 auf der weiteren Seite sind derart aufeinander abgestimmt, daß die einzelnen Übergaben behinderungsfrei und im Gleichlauf erfolgen können. Das bedeutet, daß sich während der Zeit, in der eine Doppelform 3 von der Transportbahn 1 in den Bereich der Übergabevorrichtung 7 transportiert wird, sich keine Auflageschiene 7c-7f im Transportweg befindet. Die Auflageschienen 7c-7d laufen synchron und parallel zu den Trag- und Halteelementen 14, so daß im Gleichlauf durch Vorsteuern der Schieberplatte 8 in Richtung des Pfeils 17 die einzelnen Doppelformen in die daneben laufenden Trag-und Halteelemente 14 eingeschoben werden können. Der Abstand der nächstfolgenden Doppelform 3 im Bereich der Übergabevorrichtung 7 ist ausreichend lang, um ein Vorsteuern und Zurückbewegen der Schieberplatte 8 zu ermöglichen.

## Patentansprüche

1.   Transport- und Behandlungsvorrichtung für aus einer oder zwei übereinanderliegenden, Formhohlräume für eine gießfähige, erstarrende Masse, wie Schokoladenmasse, aufweisenden Platten bestehenden Formen, mit einem umlaufenden, insbesondere als Kettenförderer ausgebildeten Endlosförderer, der zur Aufnahme und zum Wenden der Formen Trag- und Halteelemente aufweist,

**dadurch gekennzeichnet,** daß einem vertikal verlaufenden Abschnitt (10) des Endlosförderers (13) eine horizontal verlaufende Transportbahn (1) für die Formen (3) vorgeordnet ist und daß zwischen dem vertikal verlaufenden Abschnitt (10) des Endlosförderers (13) und der Transportbahn (1) eine Übergabevorrichtung (7) angeordnet ist, aus der die von der Transportbahn (1) übernommenen Formen (3) mittels einer Schubvorrichtung (8) unter Gleichlauf parallel und synchron an die Trag- und Halteelemente (14) des Endlosförderers (13) überführbar sind, ohne daß es notwendig ist, daß für diese Aufgabe der Endlosförderer angehalten wird.

2. Transport- und Behandlungsvorrichtung nach Anspruch 1,
   **dadurch gekennzeichnet,** daß die Übergabevorrichtung (7) Auflageschienen (7c-7f) aufweist, die in dem vertikal verlaufenden Abschnitt (10) des Endlosförderers parallel und synchron zu den Trag- und Halteelementen (14) des Endlosförderers (13) angetrieben sind.

3. Transport- und Behandlungsvorrichtung nach Anspruch 1 oder 2,
   **dadurch gekennzeichnet,** daß die dreh- und/oder schwenkbar am Endlosförderer (13) gelagerten Trag- und Halteelemente (14) durch im vertikalen Abschnitt (10) des Endlosförderers (13) vorgesehene Führungsschienen (18) dreh- und/oder schwenkfest gehalten sind.

4. Transport- und Behandlungsvorrichtung nach einem der Ansprüche 1 bis 3,
   **dadurch gekennzeichnet,** daß die Schubvorrichtung (8) aus einem in Transportrichtung (6) der Transportbahn bewegbaren und sich über die vertikale Transporthöhe der Formen (3) in der Übergabevorrichtung (7) erstreckenden Schieber besteht.

5. Transport- und Behandlungsvorrichtung nach einem der Ansprüche 1 bis 4,
   **dadurch gekennzeichnet,** daß die Übergabevorrichtung (7) nach Art eines Paternosteraufzuges ausgebildet ist.

## Claims

1. A conveying and treatment apparatus for moulds comprising one or two plates disposed one above the other and having mould cavities for a pourable, solidifying mass, such as chocolate mass, the apparatus having a rotating endless conveyor which more particularly takes the form of a chain conveyor and has supporting and retaining elements for receiving and inverting the moulds, characterized in that a vertically extending portion (10) of the endless conveyor (13) is preceded by a horizontally extending conveying path (1) for the moulds (3), and disposed between the vertically extending portion (10) of the endless conveyor (13) and the conveying path (1) is a transfer device (7) from which the moulds (3) taken over from the conveyor path (1) can be transferred by means of a thrust device (8) in parallel and in synchronism to the supporting and retaining element (14) of the endless conveyor (13), without the need for the endless conveyor to be stopped for this purpose.

2. A conveying and treatment apparatus according to claim 1, characterized in that the transfer device (7) has bearing rails (7c-7f) which are driven in the vertically extending portion (10) of the endless conveyor in parallel and in synchronism with the supporting and retaining element (14) of the endless conveyor (13).

3. A conveying and treatment apparatus according to claims 1 or 2, characterized in that the supporting and retaining elements (14), mounted rotatably and/or pivotably on the endless conveyor (13), are retained non-rotatably and/or non-pivotably by guide rails (18) provided in the vertical portion (10) of the endless conveyor (13).

4. A conveying and treatment apparatus according to one of claims 1 to 3, characterized in that the thrust device (8) comprises a slide which can be moved in the conveying direction (6) of the conveying path and extends over the vertical conveying height of the moulds (3) in the transfer device (7).

5. A conveying and treatment apparatus according to one of claims 1 to 4, characterized in that the transfer device (7) is constructed after the fashion of a continuous lift.

## Revendications

1. Dispositif de transport et de traitement pour des moules constitués de une ou deux plaques disposées l'une au-dessus de l'autre et présentant des cavités de moule pour une masse coulable durcissable telle qu'une masse de chocolat, avec un transporteur sans fin circulant, réalisé en particulier sous forme d'un transporteur à chaîne, qui présente des éléments de support et de maintien pour recevoir et pour retourner les moules.
   caractérisé en ce qu'un chemin de transport (1) pour les moules (3) s'étendant horizontalement est disposé en avant d'une section (10) s'étendant verticalement du transporteur sans fin (13) et qu'un dispositif de transfert (7) est disposé entre la section (10) s'étendant verticalement du transporteur sans fin (13) et le chemin de transport (1), duquel les moules (3) reçus par le transporteur sans fin (1) peuvent être transportés en synchronisme aux éléments de support et de maintien (14) du transporteur sans fin (13) au moyen d'un dispositif pousseur (8) parallèlement et en synchronisme, sans qu'il soit nécessaire que le transporteur sans fin soit arrêté dans ce but.

2. Dispositif de transport et de traitement selon la revendication 1,
caractérisé en ce que dispositif de transfert (7) présente des barres d'appui (7c-7f) qui sont entraînées dans la section (10) s'étendant verticalement du transporteur sans fin parallèlement et en synchronisme aux éléments de support et de maintien (14) du transporteur sans fin (13).

3. Dispositif de transport et de traitement selon la revendication 1 ou 2,
caractérisé en ce que les éléments de support et de maintien (14) montés rotatifs et/ou pivotants sont maintenus fixes en rotation et/ou en pivotement par des barres de guidage (18) disposées dans la section verticale (10) du transporteur sans fin (13).

4. Dispositif de transport et de traitement selon l'un des revendications 1 à 3,
caractérisé en ce que le dispositif pousseur (8) est constitué par une coulisse mobile en direction de transport (6) du chemin de transport et s'étendant sur la hauteur de transport verticale des moules (3) dans le dispositif de transfert (7).

5. Dispositif de transport et de traitement selon l'une des revendications 1 à 4,
caractérise en ce que le dispositf de transfert (7) est réalisé sous la forme d'un pater-noster.

# Fig.1

# Fig.2